# EUROPEAN PATENT APPLICATION

(11) **EP 1 375 312 A2**
(43) Date of publication of application: **02.01.2004**
(21) Application number: 02021139.7
(22) Date of filing: 23.09.2002
(51) Int. Cl.: B62D 33/04

(54) **Improved cover for isothermal panel**

(30) Priority: 04.06.2002 ES 200201426 U
(71) Applicant: Vicente Miro Bravo, 03800 Alcoy, Alicante (ES)
(72) Inventor: Vicente Miro Bravo, 03800 Alcoy, Alicante (ES)
(74) Representative: Isern Jara, Nuria

(57) **Abstract**

Improved cover for isothermal panel (1), especially suitable for refrigerated vehicle transport. The cover can be fitted on only one side or on both sides of a panel of thermal insulating material and is made up of a series of metal sheets (3) arranged transversally between which there are some other sheets (2) superimposed, suitable for welding and removal. Each sheet that is on the surface of the cover has a V-shaped receiving groove (4) on the edge of an adjoining sheet (2) for the reception of the V shaped profile (5) on both edges of each intermediate sheet to accommodate the weld.

## Description

The aim of the present Model of Utility is the registration of an improved cover for isothermal panels that incorporates noticeable innovations and advantages compared to the present isothermal and similar panel covers.

More specifically the invention deals with a cover that is made up of a wide range of metal sheets that allow the making up of isothermal panels, specially suited for refrigerated transport vehicle. The cover assembled onto an isothermal sandwich type panel is made up from a series of metal sheets arranged transversally and which comprise of a V-shaped receiving groove on the edge of a middle sheet that is welded to the next two sheets near to the adjacent edge of the next sheet.

### BACKGROUND T0 THE INVENTION

At the present time the majority of the isothermal panels for vehicles are of the sandwich type, being made from a lower layer of material with a large insulating capacity and a more rigid external laminate material for protection, such as polyester and synthetic resins, equally on one side or on both. In large vehicles, such as the articulated trucks and trailers for road transport, the panels are very large and are exposed to accidents and aggression that can lead to their deterioration, and the need for their replacement. The polyester coverings are expensive and the repair does not give very good results. In addition, to minimise the repair cost of a large surface comprises of multiple smaller panels joined by a structure or profiles, which constitute thermal bridges reducing the insulation.

### DESCRIPTION OF THE INVENTION

The aim of the improved cover for isothermal panels of this present invention is to provide a cheap and practical means of making isothermal panels with a low cost and that are easily repaired, especially suited for use with refrigerated vehicles and transport.

In effect, the cover of the new invention can be fitted to sandwich type or similar insulation panels. It is comprised of various sheets covering the insulating material. The sheets have a small space between them and close to the common edge have a longitudinal V shaped groove, respectively. Onto this joint between the two adjacent sheets, there is a longitudinal sheet that covers said expansion space, overlapping the adjacent sheets. This sheet has respective grooves on its edges to be fitted into the grooves of the sheet. The sheet, once having been fitted over the joint of the sheets is welded on the coincidental grooves in the traditional manner.

The sheet acts as reinforcement or as a pillar, moreover in cases in which the panel is positioned vertically, being integrated into the assembly of the cover.

It is provisioned that both the lateral sheets and equally the sheet fitted in between are coplanar. In order to do this the extension of the wings on the sheets after the reception fold are provisioned to be pressed inwards.

In addition, it offers great ease for repairs to the panel as if one of the sheets becomes deteriorated and requires replacement it is only necessary to break the weld on the adjacent sheets, remove the damaged sheet to insert a new sheet. Afterwards the new sheets are welded once again between the new sheet and the adjacent sheets, leaving the assembly repaired without the need to carry out complex repair operations, as required by the coverings of polyester and resin.

In order to make the welding operation easier and so that the sheets can be removed easily, the external profile of the bent over edges of the sheet have a shorter external cut than the ones they fit against on the groove of the sheet. This leaves an empty space to take the welding bead.

It has also been provisioned for the weld to be made in an alternative manner, with or without the contribution of material and in a continuous or discontinuous way.

The new invention is applicable to both panels with a covering on two sides or equally to panels with covering on only one side.

In order to complete the description that is going to be made below and for the purpose of helping to give a greater understanding of its characteristics, the present descriptive memorandum is accompanied by a set of drawings, which are by way of illustration and not by way of limitation, where the most significant details of the invention are represented.

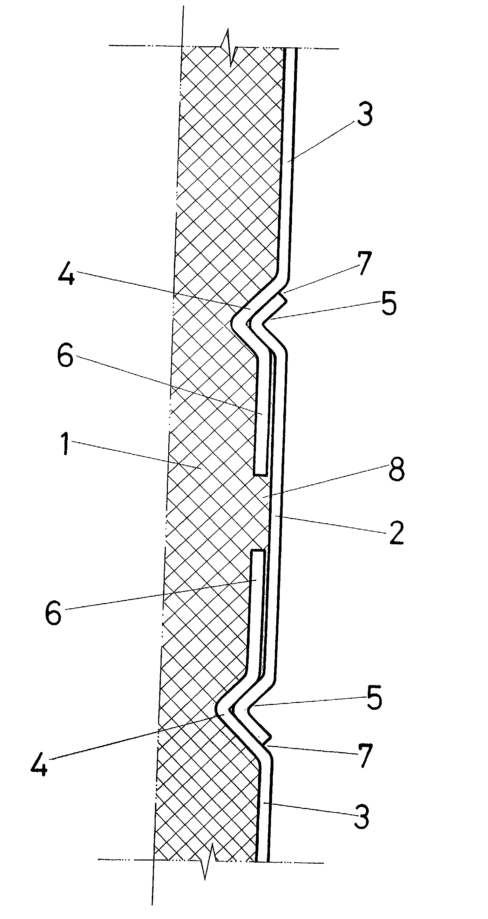

### BRIEF DESCRIPTION OF THE DRAWING

The sole drawing shows a section view of the covering fitted onto an isothermal panel.

### DESCRIPTION OF A PREFERRED EMBODIMENT

In view of the stated drawing and in accordance with the numbering adopted, a preferred embodiment can be seen in same, although this is not by way of limitation. This consists of a covering made up of a series of adjacent sheets (3) arranged onto the surface of a panel (1), there being a separation space (8) between the leading edges of said sheets (3). Each one of the sheets (3) has groove (4) or longitudinal fold close to its edge in the shape of a V. Over the space (8) between two adjacent (3) sheets there is a joining sheet (2) made up from a flat element whose two longitudinal edges are bent in a V form (5). Said portions (5) of the sheet (2) bent in V form are housed into the groves or folds (4) existing in each one of the sheets (3). The V profiles (5) of the in-between sheet (2) have a shorter longitudinal edge, making a space (7) for the insertion of the welding bead. Each one of the sheets (3) of the cover has an elongated edge (6) from the groove (4) up to the space (8) provisioned on a plane that has been directed inwards, onto which the sheet (2) is supported.

## Claims

1. Improved cover for isothermal panel, suitable for covering the surface of an isothermal panel (1) on one or on the two main sides, **characterised in that** it is made up of multiple sheets (3) on the surface of said panel (1) arranged adjacently and there being a separation space (8) between them, over this space (8) an overlapping longitudinal sheet (2) is placed; and **in that** each sheet (3) has a groove or V shaped bend (4) close to the edge adjacent to the separation space (8); and **in that** the sheet (2) respectively has a longitudinal profile or V shaped bend (5) along its two edges, fitted into the groove (4) existing in the adjoining sheet (3); and **in that** it comprises of a joint made by welding between the profile (5) of the edge of the sheet (2) and the sheets (3).

2. Improved cover for isothermal panel, according to claim 1, **characterised in that** the sheets (2) and the sheets (3) are made from a metal material.

3. Improved cover for isothermal panel, according to claims 1 and 2, **characterised in that** the V shaped bend or profile (5) of the edge of the sheet (2) has a short width on its external edge and there is a space (7) for the insertion of a welding bead.

4. Improved cover for isothermal panel, according to claims 1, 2 and 3, **characterised in that** there is an alternative embodiment by welding the sheets (3) and the sheet (2) by means of a weld without the contribution of material.

5. Improved cover for isothermal panel, according to claims 1, 2 and 3, **characterised in that** the sheet (2) and the adjacent sheets (3) are coplanar; and **in that** the edge (6) present on each sheet (3) between the groove (4) and the separation space (8) is slightly introduced into the panel (1) for the purpose of leaving a housing for the assembly of the sheet (2).
